# EUROPÄISCHE PATENTSCHRIFT

(11) **EP 2 402 827 B1**
(45) Veröffentlichungstag und Bekanntmachung des Hinweises auf die Patenterteilung: **21.01.2015**
(21) Anmeldenummer: 11002721.6
(22) Anmeldetag: 01.04.2011
(51) Int. Cl.: G05B 13/04, G05B 17/02, B60K 31/00, G06K 9/62, G09B 9/05

(54) **Verfahren und Vorrichtung für eine Funktionsprüfung einer Objekt-Erkennungseinrichtung eines Kraftwagens**
Method and device for testing the functionality of an object recognition device of a motor vehicle
Procédé et dispositif pour un contrôle de fonction d'un dispositif de reconnaissance d'objet d'un véhicule automobile

(30) Priorität: 06.04.2010 DE 102010013943
(43) Veröffentlichungstag der Anmeldung: 04.01.2012
(73) Patentinhaber: Audi AG, 85045 Ingolstadt (DE)
(72) Erfinder: Nentwig, Mirko, 85057 Ingolstadt (DE)
(74) Vertreter: Thielmann, Frank

(56) Entgegenhaltungen:
- DE-A1- 10 047 082
- DE-A1-102006 060 553
- DE-A1-102008 001 256
- US-A1- 2005 196 035

## Beschreibung

Die Erfindung betrifft ein Verfahren zum Ermöglichen einer Funktionsprüfung einer Erkennungseinrichtung, welche dazu ausgelegt ist, ein Objekt in einer Umgebung eines Kraftwagens anhand von Sensordaten wenigstens eines Sensors des Kraftwagens selbsttätig zu erkennen. Die Erfindung betrifft auch eine entsprechende Vorrichtung zum Ermöglichen einer Funktionsprüfung.

Bei einem Kraftwagen kann eine Fahrerassistenzfunktionalität bereitgestellt sein, durch welche ein Fahrer des Kraftwagens darin unterstützt wird, den Kraftwagen beispielsweise während einer Fahrt in dichtem Verkehr sicherer zu führen. Dazu kann in dem Kraftwagen ein Sensor eingebaut sein, durch welchen Signale aus einer Umgebung des Kraftwagens erfasst werden. Beispielsweise kann es sich bei dem Sensor um eine Kamera handeln, durch welche Bilder von vorausfahrenden Fahrzeugen erfasst werden. Durch eine Erkennungseinrichtung kann es dann ermöglicht sein, anhand von Sensordaten eines solchen Sensors, also z. B. anhand von Bilddaten der Kamera, Objekte in der Umgebung des Kraftwagens automatisch zu erkennen. Auf Grundlage einer solchen automatischen Erkennung von Objekten können dann Signale zum Steuern einzelner Fahrzeugkomponenten erzeugt werden. Beispielsweise kann so die Bremse des Kraftwagens gesteuert werden. Dann lässt sich der Kraftwagen ohne Zutun des Fahrers abbremsen, wenn der Fahrer ein Objekt übersieht, mit welchem der Kraftwagen zu kollidieren droht.

Bei einer Erkennungseinrichtung kann eine Zuordnung von Sensordaten zu einzelnen Objekten beispielsweise auf Grundlage einer Mustererkennung erfolgen, wie sie z. B. durch eine statistische Klassifikation oder ein künstliches neuronales Netz möglich ist. Das Zuordnen von Sensordaten zu einem bestimmten Erkennungsergebnis ist hier als Betreiben der Erkennungseinrichtung mit den Sensordaten bezeichnet.

Gemäß der DE 100 47 082 A1 kann zum Überprüfen einer Erkennungseinrichtung für eine Abstandsregelungsfunktionalität eines Kraftwagens eine Umgebung simuliert werden, in welcher sich der Kraftwagen befinden könnte. Bei einer solchen Simulation wird berechnet, wie sich eine Lage von Objekten bezüglich des Kraftwagens verändern würde, wenn der Kraftwagen durch eine Umgebung führe, wie sie simuliert wird. So ist es beispielsweise möglich, eine Fahrt entlang eines bestimmten Streckenabschnitts einer Stra-βe zu simulieren. Befinden sich in der simulierten Umgebung beispielsweise Bäume am Straßenrand, so wird dabei durch die Simulation berechnet, wo sich die einzelnen Bäume bezüglich des Kraftwagens zu einem bestimmten Zeitpunkt befinden. Genauso kann berechnet werden, in welchem Abstand sich andere Fahrzeuge zu dem Kraftwagen mit der Erkennungseinrichtung während der simulierten Fahrt befinden. Was genau simuliert wird, wird zuvor durch eine Beschreibung der zu simulierenden Umgebung festgelegt. Eine solche Beschreibung kann durch einen Datensatz bereitgestellt sein, in dem Werte für Parameter eines Umgebungsmodells zusammengefasst sind. Solche Parameter eines Umgebungsmodells stehen z. B. für einen Verlauf der Straße, die Verkehrsdichte, eine Art der Randbebauung der Straße und das zu simulierende Wetter, welches während der simulierten Fahrt herrscht. Genauso könnte sich durch einen entsprechenden Parameter z.B. auch bestimmen lassen, inwieweit eine Sicht aus dem Kraftwagen heraus auf die umliegenden Objekte beispielsweise durch Nebel beeinträchtigt ist.

Die Werte für die Parameter des Umgebungsmodells werden üblicherweise von einer Bedienperson an dem Simulator über eine graphische Bedienoberfläche eingestellt. Anschließend wird die Simulation gestartet. In der Simulation werden dann für unterschiedliche Zeitpunkte Informationen über die simulierten Objekte berechnet. Anhand der Informationen ist es dann möglich, Sensordaten zu ermitteln, welche ein Sensor des Kraftwagens aufgrund von Signalen aus der Umgebung erzeugen würde, wenn sich der Kraftwagen tatsächlich in einer Umgebung befinden würde, wie sie durch den Simulator simuliert wird. Beispielsweise kann eine Bildsequenz von einer simulierten Umgebung aus einem Blickwinkel einer Kamera eines Kraftwagens berechnet werden. Weiter können dann zu dieser Bildsequenz die Kamerasignale, also die Bilddaten, ermittelt werden, welche die Kamera ausgeben würde. Diese Bilddaten können dabei entweder berechnet werden oder mittels einer Kamera des Kraftwagens erzeugt werden. In dem letzteren Fall kann dazu z.B. vor die Kamera ein Bildschirm aufgebaut sein, welcher die Bildsequenz anzeigt. Durch Abfilmen des Bildschirms ergeben sich dann Bilddaten, die denjenigen sehr ähnlich sind, wie sie von der Kamera bei einer Fahrt durch eine wirkliche Umgebung erzeugt werden.

Anhand der Bilddaten können mittels der Erkennungseinrichtung dann die simulierten Fahrzeuge vor dem Kraftwagen oder auch die simulierten Bäume am Fahrbahnrand erkannt werden. Als Erkennungsergebnis wird dann von der Erkennungseinrichtung angezeigt, welche Objekte erkannt wurden.

Bei der Funktionsprüfung einer Erkennungseinrichtung sollte sichergestellt sein, dass die Funktionsweise der Erkennungseinrichtung für möglichst viele unterschiedliche Umgebungen überprüft wird. Bei dem oben beschriebenen Simulator muss eine Bedienperson daher eine große Anzahl von unterschiedlichen Umgebungen simulieren und sich dann anhand der Erkennungsergebnisse, welche die Erkennungseinrichtung auf Grundlage der Sensordaten zu den einzelnen Umgebungen erzeugt, einen Eindruck davon verschaffen, ob die Erkennungseinrichtung in allen zu erwartenden Situationen in der gewünschten Weise funktioniert. Erzeugt die Erkennungseinrichtung dabei für eine bestimmte Umgebung eine unerwünscht hohe Anzahl von fehlerhaften Erkennungsergebnissen, muss die Bedienperson dann die Ursache für die mangelhafte Funktionsweise herausfinden und die Erkennungseinrichtung entsprechend anpassen. Für diese eingehendere Funktionsprüfung können weitere Erkennungsversuche nötig sein, wobei dazu Umgebungen simuliert werden, welche derjenigen ähnlich sind, für welche bei der Erkennungseinrichtung Mängel erkannt wurden. Dadurch lässt sich eine Ursache für die unerwünschten Erkennungsergebnisse einfacher herausfinden.

In der DE 10 2008 001 256 A1 ist ein Erkennungssystem mit einem Klassifikator für Verkehrsobjekte beschrieben. Ein Szenengenerator simuliert Verkehrssituationen, zu denen der Klassifikator ein Klassifikationsergebnis erzeugt. Das Klassifikationsergebnis wird durch ein Vergleichsmodul mit einer Bedeutungsinformation verglichen. In Abhängigkeit von dem Vergleichsergebnis verbessert eine Lernkomponente den Klassifikator in einem Nachtraining. Neben einer Verbesserung des Klassifikators ist vorgesehen, den Szenengenerator selbst dahingehend zu verbessern, dass die simulierten Verkehrssituationen möglichst real wirken. Dazu werden sowohl eine reale Verkehrsszene als auch eine dieser entsprechende, durch den Szenengenerator simulierte Verkehrsszene mittels des Klassifikators klassifiziert. Falls der Klassifikator zu den beiden Verkehrsszenen unterschiedliche Erkennungsergebnisse liefert, kann die erkannte Abweichung zum Verbessern der Synthese verwendet werden.

Es ist Aufgabe der vorliegenden Erfindung, bei einem Kraftwagen, welcher zum Bereitstellen einer Fahrerassistenzfunktionalität eine Erkennungseinrichtung aufweist, eine Funktionsprüfung dieser Erkennungseinrichtung zu erleichtern.

Die Aufgabe wird durch ein Verfahren gemäß Patentanspruch 1 gelöst. Die Aufgabe wird auch durch eine Vorrichtung zum Betreiben einer Erkennungseinrichtung gemäß Patentanspruch 7 gelöst. Vorteilhafte Weiterbildungen des erfindungsgemäßen Verfahrens sind durch die Unteransprüche gegeben.

Das erfindungsgemäße Verfahren ermöglicht eine Funktionsprüfung einer Erkennungseinrichtung, welche dazu ausgelegt ist, ein Objekt in einer Umgebung eines Kraftwagens selbsttätig zu erkennen, wobei für die Erkennung Sensordaten wenigstens eines Sensors des Kraftwagens zugrundegelegt werden. Beispiele für solche Sensoren sind eine Kamera, ein Radarsensor und ein Ultraschallsensor.

Bei dem erfindungsgemäßen Verfahren wird ein Simulator bereitgestellt, mittels welchem ein Simulieren einer Umgebung ermöglicht ist. Die zu simulierende Umgebung lässt sich dabei durch Vorgeben eines Datensatzes bestimmen. Des Weiteren wird wenigstens ein solcher Datensatz bereitgestellt und zu jedem Datensatz die entsprechende Umgebung simuliert. Auf Grundlage der Simulation werden zu jeder Umgebung Sensordaten erzeugt, mit welchen dann die Erkennungseinrichtung betrieben wird. Hierbei werden für jede Umgebung Erkennungsergebnisse der Erkennungseinrichtung ermittelt. Die Erkennungsergebnisse für jede Umgebung werden mit einem Soll-Erkennungsergebnis verglichen, wie es sich aus der jeweiligen simulierten Umgebung ergibt. Es wird so festgestellt, ob durch die Erkennungseinrichtung Objekte in der gewünschten Weise erkannt wurden. In Abhängigkeit von einem Ergebnis des Vergleichs wird dann automatisch wenigstens ein Ergänzungsdatensatz erzeugt, durch welchen ein Simulieren einer weiteren Umgebung ermöglicht ist.

Bei dem erfindungsgemäßen Verfahren ist vorgesehen, dem wenigstens einen Ergänzungsdatensatz einen Datensatz zu einer solchen Umgebung zugrunde zu legen, für welche ein Erkennungsergebnis einem vorbestimmten Kriterium genügt. Der wenigstens eine Ergänzungsdatensatz wird dann durch Verändern nur eines Teils dieses Datensatzes erzeugt. Mit anderen Worten wird der Ergänzungsdatensatz dadurch erzeugt, dass der Datensatz für die bereits simulierte Umgebung abgewandelt wird. Dann ergibt sich also ein Datensatz, der eine ähnliche Umgebung beschreibt, wie sie bereits simuliert wurde. Dadurch ist in vorteilhafter Weise eine genaue Überprüfung der Erkennungseinrichtung für besonders kritische Umgebungen ermöglicht.

Sind beispielsweise durch die anfangs bereitgestellten Datensätze solche Umgebungen bestimmt, in welchen jeweils ein anderes Wetter herrscht, so könnte es z.B. sein, dass die Überprüfung der Erkennungsergebnisse ergibt, dass die Erkennungseinrichtung insbesondere bei Regen zu häufig das Vorhandensein eines Objektes unmittelbar vor dem Kraftwagen anzeigt, obwohl sich dort keines befindet. Dann ist denkbar, dass in dem Schritt des automatischen Erzeugens wenigstens eines Ergänzungsdatensatzes solche Datensätze erzeugt werden, durch welche mehrere Umgebungen bestimmt sind, denen allen gemein ist, dass es regnet, bei denen sich aber beispielsweise die jeweilige simulierte Verkehrsdichte unterscheidet.

Insgesamt kann also in vorteilhafter Weise erreicht werden, dass automatisch ein Datensatz für eine Umgebung bereitgestellt wird, zu welcher sich durch den Vergleich der Erkennungsergebnisse herausgestellt hat, dass die Erkennungseinrichtung besonders viele Fehler beim Erkennen macht. Allgemeiner ausgedrückt, wird ein Datensatz erzeugt, welcher eine Simulation einer Umgebung ermöglicht, für welche sich ein Bedarf für weitere Funktionsprüfungen herausgestellt hat.

Die erfindungsgemäße Vorrichtung ist ebenfalls zum Ermöglichen einer Funktionsprüfung einer Erkennungseinrichtung geeignet. Die erfindungsgemäße Vorrichtung weist eine Einrichtung auf, mit der eine Umgebung simuliert werden kann. Die Simulation ist dabei mittels eines die zu simulierende Umgebung bestimmenden Datensatzes steuerbar. Zu der simulierten Umgebung können mittels einer entsprechenden Einrichtung Sensordaten erzeugt werden, wie sie ein Sensor eines Kraftwagens bei einer Fahrt des Kraftwagens durch die Umgebung erzeugen würde. Des Weiteren ist eine Einrichtung zum Betreiben der Erkennungseinrichtung mit den Sensordaten bereitgestellt. In Abhängigkeit von Erkennungsergebnissen der Erkennungseinrichtung lässt sich dann mit einer entsprechenden Einrichtung wenigstens ein weitere Datensatz für den Simulator erzeugen. Die erfindungsgemäße Vorrichtung kann in einer Realisierung der Erfindung beispielsweise als ein Computer bereitgestellt sein. Die Einrichtungen der erfindungsgemäßen Vorrichtung können dann Programme sein, die von dem Computer ausgeführt werden. Die Einrichtung zum Simulieren kann aber auch ein Versuchsstand sein. Die Einrichtung zum Erzeugen der Sensordaten kann auch einen Sensor umfassen, wie er auch in einem Kraftwagen eingebaut sein kann, in dem die zu prüfende Erkennungseinrichtung nach der Funktionsprüfung betrieben werden soll.

Mittels der erfindungsgemäßen Vorrichtung lassen sich automatisch Datensätze für solche Umgebungen erzeugen, in denen die von der Erkennungseinrichtung zu bestimmten simulierten Umgebungen erzeugten Erkennungsergebnisse ein vorbestimmtes Kriterium erfüllen. Eine mit der Prüfung der Erkennungseinrichtung betraute Person braucht nun also nur noch zu Beginn einer Funktionsprüfung Datensätze für einige, sich deutlich unterscheidende Umgebungen festlegen. Mittels des erfindungsgemäßen Verfahrens bzw. mit Hilfe der erfindungsgemäßen Vorrichtung lassen sich dann automatisch Ergänzungsdatensätze erzeugen. Diese Ergänzungsdatensätze ermöglichen dann eine Simulation von solchen Umgebungen, für die klar ist, dass eine genauere Überprüfung der Funktionsweise der Erkennungseinrichtung nötig ist.

In diesem Zusammenhang wird bei dem erfindungsgemäßen Verfahren in vorteilhafter Weise die oben beschriebene Abfolge der Schritte des Verfahrens mehrfach hintereinander ausgeführt. Hierbei werden jeweils bei den Wiederholungen der Abfolge zu den Datensätzen, welche zu Beginn eines Durchlaufs der Abfolge der Schritte bereitgestellt werden, auch die automatisch erzeugten Ergänzungsdatensätze hinzugefügt. Dadurch ergibt sich eine Zusammenstellung von Datensätzen, durch welche eine Simulation der ursprünglich beispielsweise von der mit der Prüfung betrauten Person festgelegten Umgebungen und durch welche zusätzlich auch eine Simulation solcher Umgebungen ermöglicht ist, für welche das Ergebnis der Vergleichs der Erkennungsergebnisse beispielsweise gezeigt hat, dass die Erkennungseinrichtung nicht in gewünschter Weise funktioniert. Eine solche Zusammenstellung von Datensätzen kann dann für eine Überprüfung einer verbesserten Erkennungseinrichtung oder für eine Anpassung einer Erkennungseinrichtung verwendet werden. Das wiederholte Ausführen der Abfolge wird schließlich abgebrochen, wenn das Ergebnis des Vergleichs einem vorbestimmten Kriterium genügt.

Im Bezug auf das Erzeugen der Sensordaten können diese beispielsweise mittels eines entsprechenden Programms berechnet werden, das von einem Computer ausgeführt wird. Dann sind in vorteilhafter Weise keine Sensoren zum Erzeugen der Sensordaten nötig. Durch das Programm können beispielsweise ein Rauschen eines Sensors, eine optische Verzerrung einer Linse einer Kamera und ähnliche Störungen nachgestellt werden. Gemäß einer bevorzugten Ausführungsform des erfindungsgemäßen Verfahrens werden dementsprechend Sensordaten anhand von Kennwerten zu dem wenigstens einen Sensor ermittelt. Solche Kennwerte können beispielsweise ein Maß für ein Sensorrauschen oder für eine optische Verzerrung angeben.

Insbesondere wird bevorzugt zum Erzeugen von Bilddaten für jede simulierte Umgebung eine Bildsequenz von der simulierten Umgebung berechnet. Anhand einer solchen berechneten Bildsequenz können dann als Sensordaten solche Bilddaten bereitgestellt werden, wie sie auch durch eine Kamera erzeugt werden. Dabei können natürlich auch Kennwerte von einer bestimmten Kamera beim Berechnen der Bilddaten berücksichtigt sein.

Eine alternative Weiterbildung des erfindungsgemäßen Verfahrens ergibt sich, wenn für jede simulierte Umgebung und zu jedem Sensor des Kraftwagens wenigstens eine physikalische Größe auf einen Wert eingestellt wird, welcher sich aus der Simulation ergibt, und mit dem Sensor die zugehörige physikalische Größe gemessen wird. Für den Fall, dass es sich bei dem Sensor um eine Kamera handelt, kann mit selbiger eine Bildsequenz von einem Bildschirm abgefilmt werden, auf welchem die simulierte Umgebung graphisch dargestellt wird. Die einzustellenden physikalischen Größen sind in diesem Fall dann die Farben der Bildpunkte des Bildschirms. Die Bilddaten der Kamera sind dann als Sensordaten für die Erkennungseinrichtung verwendbar.

Durch diese Weiterbildung des erfindungsgemäßen Verfahrens können als Sensordaten Messsignale von solchen Sensoren bereitgestellt werden, die dafür vorgesehen sind, in einem Kraftwagen eingebaut zu werden. Dadurch ergibt sich der Vorteil, dass beim Ermitteln der Erkennungsergebnisse auch die bereits beispielhaft beschriebenen Eigenschaften der Sensoren des Kraftwagens berücksichtigt werden. Durch Verwenden der Sensoren selbst müssen hier dagegen deren Kennwerte nicht ermittelt werden.

Bei dem erfindungsgemäßen Verfahren wird bevorzugt in dem Schritt des Erzeugens eines Ergänzungsdatensatzes zusätzlich wenigstens ein von der Erkennungseinrichtung verwendeter Parameter in Abhängigkeit von dem Ergebnis des Vergleichs verändert. Dabei handelt es sich um einen Parameter, durch welchen eine Zuordnung von Sensordaten zu einem bestimmten Erkennungsergebnis bestimmt ist. Durch eine solche Veränderung eines Parameters kann bewirkt werden, dass die Erkennungseinrichtung in der Weise an eine bestimmte Umgebung angepasst wird, dass es in dieser ein Objekt mit einer höheren Wahrscheinlichkeit in einer gewünschten Weise erkennt.

Das Verändern des wenigstens einen Parameters erfolgt dabei bevorzugt anhand eines Trainings der Erkennungseinrichtung mit Sensordaten zu einer solchen simulierten Umgebung, für welche ein Ergebnis des Vergleichs einem vorbestimmten Kriterium genügt. Wird beispielsweise anhand der Erkennungsergebnisse festgestellt, dass die Erkennungseinrichtung in einer nebligen Umgebung zu häufig Objekte gar nicht erkennt, kann die Erkennungseinrichtung durch das Training mit Daten zu einer solchen nebligen Umgebung entsprechend angepasst werden. Als ein Training einer Erkennungseinrichtung wird ein an sich bekanntes Verfahren bezeichnet, bei dem zu bestimmten Sensordaten ein Soll-Erkennungsergebnis vorgegeben wird, um mittels eines Algorithmus, z. B. der rekursiven Methode der kleinsten Quadrate oder des Gradientenabstiegsverfahrens, für die von der Erkennungseinrichtung verwendeten Parameter Werte zu bestimmen, für welche ein durch die Erkennungseinrichtung erzeugtes Erkennungsergebnis mit dem Soll-Erkennungsergebnis übereinstimmt.

Die erfindungsgemäße Vorrichtung kann selbstverständlich ebenfalls in der Weise weitergebildet werden, wie es im Zusammenhang mit dem erfindungsgemäßen Verfahren beschrieben wurde. Dann ergeben sich auch bei der erfindungsgemäßen Vorrichtung die zu den einzelnen Weiterbildungen genannten Vorteile.

Die Erfindung wird im Folgenden anhand eines Ausführungsbeispiels näher erläutert. Dazu zeigt:
- Fig. 1: einen Signalflussgraphen zu einer Funktionsweise einer bevorzugten Ausführungsform der erfindungsgemäßen Vorrichtung; und
- Fig. 2: ein Flussschaubild zu einer bevorzugten Ausführungsform des erfindungsgemäßen Verfahrens.

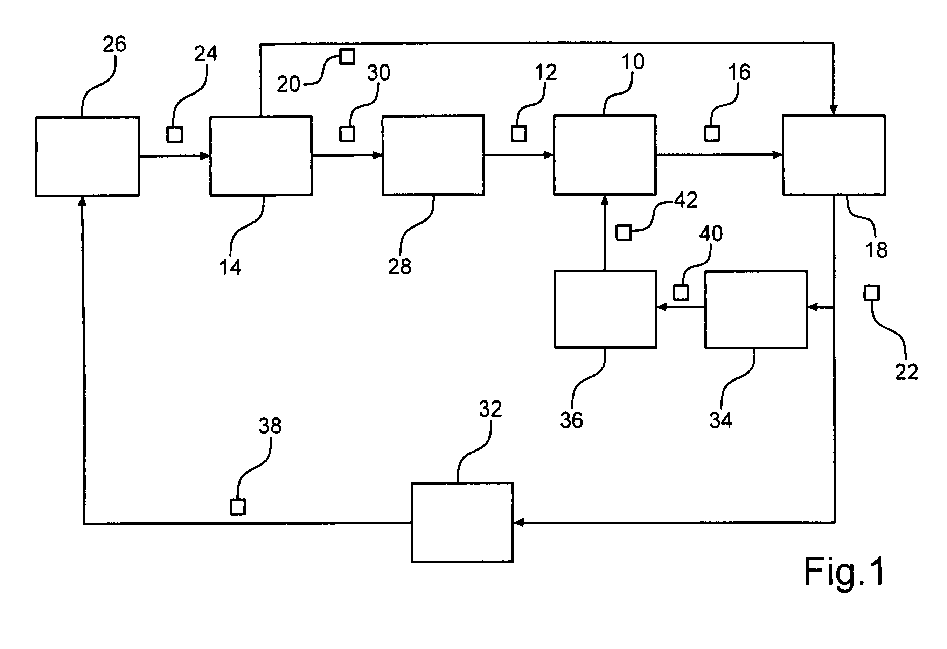

In Fig. 1 ist eine Vorrichtung zum Überprüfen einer Erkennungseinrichtung 10 für eine Fahrerassistenzfunktionalität eines Kraftwagens schematisch veranschaulicht. Mittels der Erkennungsrichtung 10 ist es möglich, anhand von Sensordaten eines Sensors des Kraftwagens Objekte in einer Umgebung außerhalb des Kraftwagens zu erkennen. Die in Fig. 1 gezeigte Vorrichtung kann als ein einzelnen oder eine Vielzahl von Programmen bereitgestellt sein, durch einen oder mehrere Computer ausgeführt werden. Durch die Erkennungseinrichtung 10 kann eine Zuordnung von Sensordaten zu bestimmten Objekten beispielsweise auf Grundlage einer Klassifikatorkaskade oder eines künstlichen neuronalen Netzes ermöglicht sein.

Durch die Vorrichtung ist es ermöglicht, die Erkennungseinrichtung 10 mit Sensordaten 12 zu einer Umgebung zu betreiben, die von einem Umgebungssimulator 14 simuliert wird. Ein Erkennungsergebnis 16 der Erkennungseinrichtung 10 wird dann durch eine Auswerteeinrichtung 18 mit einem Soll-Erkennungsergebnis verglichen, das durch die Auswerteeinrichtung 18 aus Umgebungsdaten 20 ermittelt, welche der Umgebungssimulator 14 an die Auswerteeinrichtung 18 übermittelt. Falls durch ein Ergebnis des Vergleichs angezeigt wird, dass durch die Erkennungseinrichtung 10 bestimmte Objekte in der simulierten Umgebung nicht erkannt wurden, wird ein entsprechendes Auswertungsergebnis 22 ausgegeben.

Der Umgebungssimulator 14 ist dazu ausgebildet, anhand eines Umgebungsmodells einen Verlauf einer einzelnen Versuchsfahrt zu simulieren und dabei Positionen einzelner Objekte in einer Umgebung des Kraftwagens entsprechend dem Verlauf der Versuchsfahrt zu berechnen. Ausgangspunkt einer solchen Simulation sind die Werte aus einem Parametervektor 24, auf welche entsprechende Parameter des Umgebungsmodells eingestellt werden. Der Parametervektor 24 stellt dabei einen Datensatz dar, durch den eine bestimmte Umgebung vollständig beschrieben ist.

Der Parametervektor 24 ist zusammen mit weiteren Parametervektoren in einer Datenbank 26 gespeichert. Durch jeden Parametervektor in der Datenbank 26 ist somit eine Beschreibung für eine bestimmte Fahrt in einer bestimmten Umgebungen bereitgestellt.

Für eine genauere Erläuterung sei angenommen, dass durch den Umgebungssimulator 14 auf Grundlage des Parametervektors 24 eine Umgebung simuliert wird, in welcher ein Fahrzeug vor dem Kraftwagen fährt, in welchem die Erkennungseinrichtung 10 nach der Überprüfung betrieben werden soll. Weiterhin sei angenommen, dass durch die Erkennungseinrichtung 10 in dem Kraftwagen eine Erkennung von Objekten auf Grundlage von Bilddaten einer Kamera ermöglicht werden soll, die in dem Kraftwagen eingebaut ist und durch welche ein Bereich vor dem Kraftwagen beobachtet wird.

In der in Fig. 1 gezeigten Vorrichtung ist entsprechend ein Sensorsimulator 28 bereitgestellt, durch welchen eine entsprechende Kamera simuliert wird. Von dem Umgebungssimulator 14 werden Bilddaten 30 an den Sensorsimulator 28 übermittelt. Die Bilddaten 30 repräsentieren eine Bildsequenz, durch welche die simulierte Umgebung aus einem Blickwinkel dargestellt ist, wie er dem Blickwinkel der Kamera des Kraftwagens entspricht. Der Sensorsimulator 28 berechnet dann die entsprechenden Bildsignale, wie sie auch durch die Kamera des Kraftwagens erzeugt würden. Bei einer solchen Berechnung der Bildsignale der Kamera kann beispielsweise auch eine optische Verzerrung berücksichtigt sein, welche durch eine Linse der Kamera bewirkt wird. Die berechneten Bildsignale werden dann von dem Sensorsimulator 28 als Sensordaten 12 ausgegeben.

Durch die Erkennungseinrichtung 10 wird anhand der Sensordaten 12 ein Bereich in den Kamerabildern abgegrenzt, welcher das voranfahrende Fahrzeug darstellt. Das Erkennungsergebnis 16 repräsentiert dabei all diejenigen Informationen, die von der Erkennungseinrichtung 10 aus den Sensordaten 12 über das vorausfahrende Fahrzeug und andere, in der Umgebung erkannte Objekte gewonnen wurden. In dem konkreten Beispiel kann es sich also zum einen um die Information handeln, dass sich überhaupt ein Fahrzeug vor dem Kraftwagen befindet. Des Weiteren kann auch angegeben sein, welche relative Geschwindigkeit das voranfahrende Fahrzeug hat.

Durch die Auswerteeinrichtung 18 wird anschließend ermittelt, ob sich falsche Informationen im Erkennungsergebnis 16 befinden oder ob Informationen fehlen. Eine falsche Information könnte beispielsweise sein, dass die Erkennungseinrichtung 10 einen simulierten Baum an einem Straßenrand in der simulierten Umgebung fälschlicherweise als Fahrzeug auf einer benachbarten Spur identifiziert hat. Genauso kann es vorkommen, dass die Erkennungseinrichtung 10 ein bestimmtes Objekt gar nicht von einer dem Objekt benachbarten Umgebung unterscheidet.

Ist das Erkennungsergebnis 16 fehlerhaft, so werden die zugehörigen Umgebungsdaten 20 zusammen mit Informationen darüber, welches Objekt fehlerhaft erkannt wurde, als das Auswertungsergebnis 22 zum einen an einen Szenariengenerator 32 und zum anderen an eine Steuereinrichtung 34 für eine Konfigurationseinrichtung 36 der Erkennungseinrichtung 10 übermittelt.

Für die weitere Erläuterung der Funktion des Szenariengenerators 32 sei angenommen, dass das Erkennungsergebnis 16, welches zu dem Auswertungsergebnis 22 führt, auf einer Umgebung basiert, welche durch den Parametervektor 24 bestimmt ist. Anhand des Auswertungsergebnisses 22 der Auswerteeinrichtung 18 wird durch einen Szenariengenerator 32 ein Parametervektor 38 berechnet. Bei dem Parametervektor 38 unterscheiden sich nur einige wenige Werte von denjenigen des Parametervektors 24. Auf Grundlage des Parametervektors 38 ist deshalb eine Simulation einer Umgebung ermöglicht, welche derjenigen simulierten Umgebung ähnlich ist, welche durch den Parametervektor 24 bestimmt ist. Mittels des Parametervektors 38 ist es also möglich, die Funktionsweise der Erkennungseinrichtung 10 genauer für diejenige simulierte Umgebung zu prüfen, für welche die Funktionsweise der Erkennungseinrichtung 10 Mängel zeigt.

Der Parametervektor 38 wird von dem Szenariengenerator 32 in der Datenbank 26 gespeichert, von wo aus der Parametervektor 30 bei Bedarf von dem Umgebungssimulator 14 ausgelesen werden kann.

Natürlich können durch den Szenariengenerator 32 auf Grundlage des Auswertungsergebnisses 22 auch mehrere Parametervektoren wie der Parametervektor 38 erzeugt werden, durch welche dann mittels des Umgebungssimulators 14 Simulationen mehrerer Umgebungen ermöglicht wird, die derjenigen ähnlich sind, für welche sich das Erkennungsergebnis 26 ergeben hat.

Die Steuereinrichtung 34 ist dazu ausgelegt, auf Grundlage des Auswertungsergebnis' 22 Trainingsdaten 40 zu erzeugen. Die Trainingsdaten 40 sind dazu geeignet, ein HMM oder ein neuronales Netz anzupassen, um eine Wahrscheinlichkeit dafür zu erhöhen, dass mit dem angepassten HMM bzw. dem angepassten neuronalen Netz für die simulierte Umgebung den Sensordaten 12 die richtigen Objekte zugeordnet werden. Anhand der Trainingsdaten 40 werden durch die Trainingseinrichtung 36 Parameterwerte 42 berechnet, mit denen sich die Erkennungseinrichtung 10 in entsprechender Weise konfigurieren lässt. Durch Übertragen der Parameterwerte 42 zu der Erkennungseinrichtung 10 hin wird deren Funktionsweise schließlich angepasst.

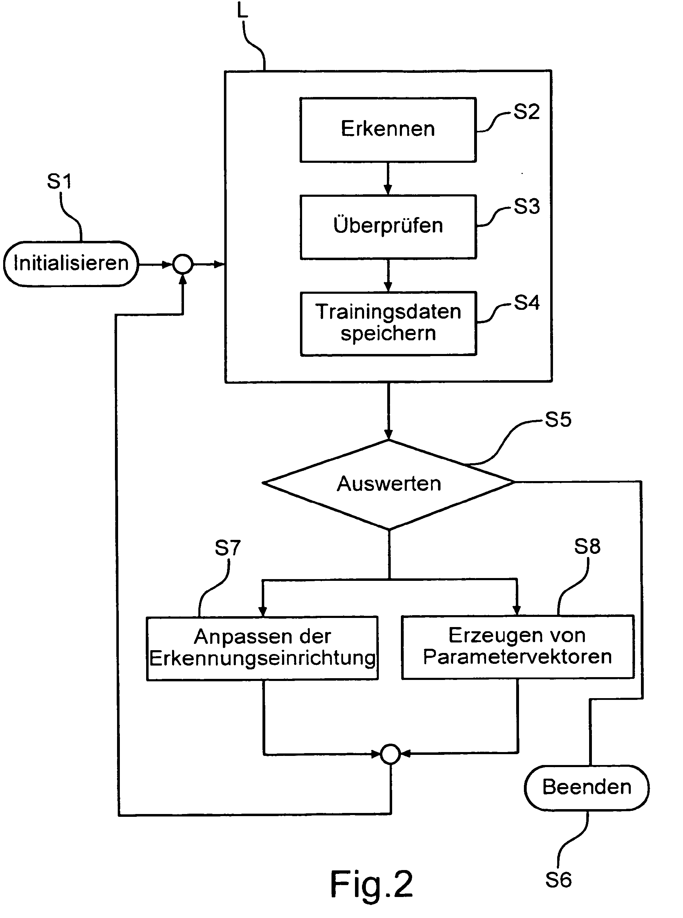

In Fig. 2 ist ein Flussschaubild dargestellt, durch welches ein Verfahren veranschaulicht ist, das durch die im Zusammenhang mit Fig. 1 erläuterte Vorrichtung ausgeführt werden kann. Mittels des Verfahrens wird die Funktionsweise der Erkennungseinrichtung 10 überprüft. Für den Fall, dass für bestimmte, simulierte Umgebungen Mängel in der Funktionsweise erkannt werden, wird die Erkennungseinrichtung zum einen in ihrer Funktionsweise an diese Umgebungen angepasst und zum anderen eine genauere Überprüfung der Erkennungseinrichtung ermöglicht, indem automatisch Parametervektoren zum simulieren ähnlicher Umgebungen erzeugt werden.

In einem Initialisierungsschritt S1 werden in der Datenbank 26 Parametervektoren gespeichert, durch welche Umgebungen beschrieben sind, die sich in wenigstens einem Wert signifikant unterscheiden. Die Parametervektoren können auf Grundlage von Messungen auf Testfahrten mit einem Kraftwagen gebildet worden sein. Anstelle von Messfahrten ist es auch möglich, mittels eines Programms für eine Versuchsplanung Parametervektoren zu erzeugen, welche repräsentative Beispiele für unterschiedliche Umgebungen darstellen, die durch das Umgebungsmodell des Umgebungssimulators 14 dargestellt werden können. Anschließend wird auf Grundlage aller in der Datenbank 26 enthaltenen Parametervektoren eine Simulation der jeweiligen Umgebungen mit dem Umgebungssimulator 14 und eine Erkennung von in den Umgebungen enthaltenen Objekten mit der Erkennungseinrichtung 10 durchgeführt. In Fig. 2 sind diese Schritte als Schleife L zusammengefasst. Im Einzelnen ist die Schleife L in drei Schritte S2, S3, S4 unterteilt. In dem Schritt S2 wird die Erkennungseinrichtung 10 mit Sensordaten 12 zu jeder simulierten Umgebung betrieben. Die Erkennungsergebnisse 16 der Erkennungseinrichtung 10 werden in dem Schritt S3 anhand der Umgebungsdaten 20 dahingehend überprüft, ob Objekte durch die Erkennungseinrichtung 10 nicht erkannt wurden bzw. falsch klassifiziert wurden. Die für den Schritt S3 nötigen Vergleiche werden durch die Auswerteeinheit 18 durchgeführt.

Für den Fall, dass die Erkennungseinrichtung 10 in einer der simulierten Umgebungen ein simuliertes Objekt nicht in der gewünschten Weise erkannt hat, übergibt die Auswerteeinheit 18 in dem Schritt S4 das entsprechende Auswertungsergebnis 22 an die Steuereinrichtung 34. Die Steuereinrichtung 34 extrahiert aus dem Auswertungsergebnis 22 diejenigen Daten, die zum Anpassen der Parameter für die Erkennungseinrichtung 10 nötig sind. Diese Trainingsdaten 40 werden von der Steuereinrichtung 34 für einen späteren Gebrauch gespeichert.

Nachdem durch mehrmaliges Ausführen der Abfolge der Schritte S2, S3, S4 der Schleife L alle der durch die Parametervektoren 24 aus der Datenbank 26 beschriebenen Umgebungen simuliert und die zugehörigen Erkennungsergebnisse 16 ausgewertet wurden, erfolgt in einem Schritt S5 eine Gesamtauswertung. Diese kann ebenfalls von der Auswertungseinrichtung 18 durchgeführt werden. In der Gesamtauswertung wird anhand der Erkennungsergebnisse 16 zu allen simulierten Umgebungen überprüft, ob die Erkennungseinrichtung 10 in allen simulierten Umgebungen Objekte in einem ausreichendem Maß erkannt hat. Ist dies der Fall, so wird das Verfahren in einem abschließenden Schritt S6 beendet. In dem Schritt S6 kann einer Person, welche die in Fig. 1 gezeigte Vorrichtung bedient, angezeigt werden, dass die Erkennungseinrichtung 10 den im Schritt S5 der Prüfung zu Grunde gelegten Kriterien genügt.

Für den Fall, dass bei der Gesamtauswertung in dem Schritt S5 erkannt wird, dass die Erkennungseinrichtung 10 für bestimmte Umgebungen in einer unerwünscht hohen Anzahl von Fällen ein Objekt nicht erkennt oder falsch klassifiziert, folgt wird die Funktionsweise der Erkennungseinrichtung 10 in einem Schritt S7 an diese Umgebungen angepasst. Parallel dazu werden in einem Schritt S8 neue Parametervektoren 38 anhand der Auswertungsergebnisse 22 erzeugt. Durch diese Parametervektoren 38 sind dabei Umgebungen für weitere Simulationen festgelegt.

In dem Schritt S7 werden durch die Steuereinrichtung 34 die gesammelten Trainingsdaten 40 an die Trainingseinrichtung 36 übergeben. Des Weiteren wird durch die Trainingseinrichtung 36 eine Anpassung von Parametern der Erkennungsrichtung 24 in der im Zusammenhang mit Fig. 1 erläuterten Weise durchgeführt. Die anhand dieses Trainings ermittelten neuen Parameterwerte 42 werden anschließend in der Erkennungseinrichtung 10 gespeichert, so dass diese bei einem zukünftigen Betrieb auch die in den Trainingsdaten 30 enthaltenen Informationen einer Erkennung zugrunde legt.

In dem Schritt S8 wird durch den Szenariengenerator 32 aus den Auswertungsergebnissen 22 der Parametervektor 24 zu derjenigen simulierten Umgebung ermittelt, für welche sich bei der Erkennung von Objekte am häufigsten Fehler ergeben haben. Durch Verändern einzelner Einträge dieses Parametervektors bei Aufrechterhaltung der übrigen Einträge werden durch den Szenariengenerator 32 weitere Parametervektoren 38 gebildet, welche sich von dem ursprünglichen Parametervektor 24 lediglich geringfügig unterscheiden. Die Gesamtheit dieser neu gebildeten Parametervektoren 38 bildet somit eine Beschreibung für Umgebungen, welche derjenigen ähnlich sind, in welcher die Erkennungseinrichtung 10 unzureichend funktioniert. Diese Parametervektoren werden als neue Parametervektoren 38 den in der Datenbank 26 gespeicherten Parametervektoren hinzugefügt.

Anschließend wird wieder die Schleife L ausgeführt und hierdurch erneut die Funktionsweise der Erkennungseinrichtung 10 überprüft. In dem anschlie-βenden Schritt S5 wird in der Gesamtauswertung dann überprüft, ob die zuvor bei der Erkennungseinrichtung 10 festgestellten Mängel behoben wurden.

Das in Fig. 2 dargestellte Verfahren ermöglicht es, die Erkennungseinrichtung 10 in ihrer Funktionsweise an eine Vielzahl von unterschiedlichen Umgebungen anzupassen. Wann immer dabei für eine bestimmte Umgebung erkannt wird, dass die Erkennungseinrichtung 10 eine unerwünscht hohe Anzahl von Fehlern bei der Erkennung von simulierten Objekten macht, wird für diese Umgebung in dem Schritt S8 automatisch ein Parametervektor für weitere, ähnliche Umgebungen erzeugt. Zugleich wird die Erkennungseinrichtung 10 in dem Schritt S7 automatisch verbessert. Bei Beendigung des Verfahrens in dem Schritt S6 ist sichergestellt, dass die Erkennungseinrichtung 10 zum einen für sämtliche, durch die Parametervektoren aus der Datenbank 26 bestimmten Umgebungen in der gewünschten Weise funktioniert, und dass zum anderen die Funktionsweise der Erkennungseinrichtung 10 für besonders kritische Umgebungen besonders umfangreich überprüft wurde.

## Patentansprüche

1. Verfahren zum Ermöglichen einer Funktionsprüfung einer Erkennungseinrichtung (10), welche dazu ausgelegt ist, ein Objekt in einer Umgebung eines Kraftwagens anhand von Sensordaten (12) wenigstens eines Sensors des Kraftwagens selbsttätig zu erkennen,
umfassend die Schritte:
a) Bereitstellen eines Simulators (14), mittels welchem ein Simulieren einer Umgebung auf Grundlage eines die zu simulierende Umgebung bestimmenden Datensatzes (24) ermöglicht ist;
b) Bereitstellen wenigstens eines Datensatzes (24) und zu jedem Datensatz (12) Simulieren der durch den Datensatz (24) bestimmten Umgebung;
c) auf Grundlage der Simulation Erzeugen von Sensordaten (12) zu jeder Umgebung;
d) Betreiben (S2) der Erkennungseinrichtung (10) mit den Sensordaten (12) und hierdurch für jede Umgebung Ermitteln eines Erkennungsergebnisses (16);
e) für jede Umgebung Vergleichen (S3) des Erkennungsergebnisses (16) mit einem durch die simulierte Umgebung (20) definierten Soll-Erkennungsergebnis;
f) in Abhängigkeit von einem Ergebnis des Vergleichs (22) automatisiertes Erzeugen (S8) wenigstens eines Ergänzungsdatensatzes (38), durch welchen ein Simulieren einer weiteren Umgebung ermöglicht ist, **dadurch gekennzeichnet, dass**
bei dem Schritt f) ein in dem Schritt b) bereitgestellter Datensatz (24) ermittelt wird, für welchen ein Erkennungsergebnis (16) einem vorbestimmten Kriterium genügt, welches besagt, dass für die durch den Datensatz (24) bestimmte Umgebung ein Bedarf für weitere Funktionsprüfungen der Erkennungseinrichtung (10) besteht, und
bei dem Schritt f) der wenigstens eine Ergänzungsdatensatz (38) durch Verändern nur eines Teils des ermittelten Datensatzes (24) erzeugt wird, so dass der Ergänzungsdatensatz eine ähnliche Umgebung beschreibt, wie sie bereits anhand des ermittelten Datensatzes (24) simuliert wurde, und
wobei eine Abfolge (L) der Schritte a) bis f) mehrfach hintereinander ausgeführt wird und hierbei bei zumindest einer Wiederholung der Abfolge (L) in dem Schritt b) zusätzlich der in dem vorangegangenen Schritt f) erzeugte wenigstens eine Ergänzungsdatensatz (38) hinzugefügt wird und wobei das wiederholte Ausführen der Abfolge (L) in dem Schritt e) abgebrochen wird, falls das Ergebnis (22) des Vergleichs einem vorbestimmten Kriterium genügt, und sich hierdurch eine Zusammenstellung (26) von Datensätzen ergibt, durch welche eine Simulation von ursprünglichen Umgebungen und durch welche zusätzlich auch eine Simulation solcher Umgebungen ermöglich ist, für die eine genauere Überprüfung der Funktionsweise der Erkennungseinrichtung (10) nötig ist.

2. Verfahren nach Anspruch 1,
wobei bei dem Schritt c) des Erzeugens der Sensordaten selbige anhand von Kennwerten zu dem wenigstens einen Sensor ermittelt werden.

3. Verfahren nach einem der vorhergehenden Ansprüche,
**dadurch gekennzeichnet, dass**
für jede Umgebung zum Erzeugen der Sensordaten ein Kamerabild von der simulierten Umgebung berechnet wird und Bilddaten des Kamerabilds als Sensordaten bereitgestellt werden.

4. Verfahren nach Anspruch 1,
wobei bei dem Schritt c) des Erzeugens der Sensordaten
- für jede Umgebung und zu jedem Sensor wenigstens eine physikalische Größe auf einen Wert eingestellt wird, welcher sich aus der Simulation ergibt,
- mit jedem Sensor die zugehörige wenigstens einen physikalische Größe gemessen wird und
- Messsignale aller Sensoren als Sensordaten bereitgestellt werden.

5. Verfahren nach einem der vorhergehenden Ansprüche,
wobei bei dem Schritt f) zusätzlich wenigstens ein von der Erkennungseinrichtung (10) verwendeter Parameter (42) in Abhängigkeit von dem Ergebnis (22) des Vergleichs verändert (S7) wird, wobei durch den Parameter (42) eine Zuordnung von Sensordaten zu einem bestimmten, möglichen Erkennungsergebnis bestimmt ist.

6. Verfahren nach Anspruch 5,
wobei der wenigstens eine Parameter (42) anhand eines Trainings (S7) der Erkennungseinrichtung (10) mit Sensordaten (12) zu einer simulierten Umgebung (30) verändert wird, für welche ein Ergebnis (22) des Vergleichs einem vorbestimmten Kriterium genügt.

7. Vorrichtung zum Ermöglichen einer Funktionsprüfung einer Erkennungseinrichtung (10), mit welcher ein automatisches Erkennen eines Objekts in einer Umgebung eines Kraftwagens anhand von Sensordaten wenigstens eines Sensors des Kraftwagens ermöglicht ist, umfassend:
- eine Einrichtung (14) zum Simulieren einer Umgebung auf Grundlage eines die zu simulierende Umgebung bestimmenden Datensatzes (24);
- eine Einrichtung (28) zum Erzeugen von Sensordaten (12) zu der wenigstens einen simulierten Umgebung;
- eine Einrichtung zum Betreiben der Erkennungseinrichtung (10) mit den Sensordaten (12);
- eine Einrichtung (18) zum Vergleichen eines Erkennungsergebnisses (16) der Erkennungseinrichtung mit einem durch die simulierte Umgebung (20) definierten Soll-Erkennungsergebnis,
- eine Einrichtung (32) zum Erzeugen wenigstens eines Ergänzungsdatensatzes (38), welche dazu ausgelegt ist, in Abhängigkeit von einem Ergebnis (22) eines von der Einrichtung (18) zum Vergleichen durchgeführten Vergleichs durch Verändern nur eines Teils eines Datensatzes (24), für welchen das Erkennungsergebnis (16) einem vorbestimmten Kriterium genügt, wenigstens einen Ergänzungsdatensatz (38) zu erzeugen, durch welchen ein Simulieren einer weiteren Umgebung ermöglicht ist, **dadurch gekennzeichnet, dass**
die Vorrichtung dazu ausgebildet ist, ein Verfahren nach einem der vorhergehenden Ansprüche durchzuführen.

## Claims

1. Method for allowing the proper functioning of a recognition means (10) to be checked, which means is designed to automatically recognise an object in a region surrounding a motor vehicle on the basis of sensor data (12) of at least one sensor of the motor vehicle,
comprising the steps of:
a) providing a simulator (14) which makes it possible to simulate a surrounding region on the basis of a set of data (24) defining the surrounding region to be simulated;
b) providing at least one set of data (24) and, for each set of data (12), simulating the surrounding region defined by the set of data (24);
c) generating, on the basis of the simulation, sensor data (12) relating to each surrounding region;
d) operating (S2) the recognition means (10) using the sensor data (12) and thus determining a recognition result (16) for each surrounding region;
e) comparing (S3), for each surrounding region, the recognition result (16) to a target recognition result defined by the simulated surrounding region (20);
f) automatically generating (S8) at least one supplementary set of data (38) according to a result of the comparison (22), which supplementary set of data makes it possible to simulate an additional surrounding region,
**characterised in that**,
in step f), a set of data (24) provided in step b) is determined, for which set of data a recognition result (16) fulfils a predetermined criterion which indicates that, for the surrounding region defined by the set of data (24), it is necessary to perform additional checks of the proper functioning of the recognition means (10), and,
in step f), the at least one supplementary set of data (38) is generated by changing just one part of the determined set of data (24), so that the supplementary set of data describes a similar surrounding region to that which has already been simulated on the basis of the determined set of data (24), and a sequence (L) of steps a) to f) being carried out a plurality of times in succession and in this regard, when the sequence (L) is repeated at least once, the at least one supplementary set of data (38) generated in the preceding step f) being additionally added in in step b), and the repetition of the sequence (L) being discontinued in step e) if the result (22) of the comparison fulfils a predetermined criterion, and a compilation (26) of sets of data being produced as a result, which compilation additionally makes it possible to simulate an original surrounding region and to also simulate that surrounding region for which a more precise check of the operation of the recognition means (10) is necessary.

2. Method according to claim 1, wherein, in step c) of generating the sensor data, the same sensor data are determined on the basis of characteristic values relating to the at least one sensor.

3. Method according to any of the preceding claims, **characterised in that**, for each surrounding region, a camera image of the simulated surrounding region is computed in order to generate the sensor data, and image data of the camera image are provided as sensor data.

4. Method according to claim 1, wherein, in step c) of generating the sensor data,
- at least one physical variable for each surrounding region and relating to each sensor is set at a value which results from the simulation,
- the associated at least one physical variable is measured by each sensor, and
- measurement signals of all the sensors are provided as sensor data.

5. Method according to any of the preceding claims, wherein, in step f), at least one parameter (42) used by the recognition means (10) is additionally varied (S7) according to the result (22) of the comparison, wherein an association of sensor data with a defined, possible recognition result is defined by the parameter (42).

6. Method according to claim 5, wherein the at least one parameter (42) is varied on the basis of a training (S7) of the recognition means (10) using sensor data (12) relating to a simulated surrounding region (30) for which a result (22) of the comparison fulfils a predetermined criterion.

7. Device for allowing the proper functioning of a recognition means (10) to be checked, which recognition means makes it possible to automatically recognise an object in a region surrounding a motor vehicle on the basis of sensor data of at least one sensor of the motor vehicle, comprising:
- a means (14) for simulating a surrounding region on the basis of a set of data (24) defining the surrounding region to be simulated;
- a means (28) for generating sensor data (12) relating to the at least one simulated surrounding region;
- a means for operating the recognition means (10) using the sensor data (12);
- a means (18) for comparing a recognition result (16) of the recognition means to a target recognition result defined by the simulated surrounding region (20),
- a means (32) for generating at least one supplementary set of data (38), which means is designed to generate at least one supplementary set of data (38), according to a result (22) of a comparison carried out by the comparison means (18), by changing just one part of a set of data (24) for which the recognition result (16) fulfils a predetermined criterion, which supplementary set of data makes it possible to simulate an additional surrounding region, **characterised in that**
the device is designed to carry out a method according to any of the preceding claims.

## Revendications

1. Procédé pour permettre un contrôle fonctionnel d'un dispositif de reconnaissance (10), qui est conçu de manière à reconnaître automatiquement un objet dans un environnement d'un véhicule automobile sur la base de données (12) au moins d'un capteur du véhicule automobile,
comprenant les étapes consistant à :
a) fournir un simulateur (14) au moyen duquel on peut effectuer une simulation d'un environnement sur la base d'un jeu de données (24) déterminant l'environnement à simuler ;
b) fournir au moins un jeu de données (24) et, pour chaque jeu de données (12), simuler l'environnement déterminé par le jeu de données (24) ;
c) sur la base de la simulation, produire des données de capteur (12) pour chaque environnement ;
d) exploiter (S2) le dispositif de reconnaissance (10) avec les données de capteur (12) et déterminer, par suite, pour chaque environnement un résultat de reconnaissance (16) ;
e) pour chaque environnement, comparer (S3) le résultat de reconnaissance (16) à un résultat de reconnaissance théorique défini par l'environnement simulé (20) ;
f) produire automatiquement (S8), en fonction d'un résultat de la comparaison (22), au moins un jeu de données de complément (38), qui permet une simulation d'un autre environnement,
**caractérisé en ce que** :
à l'étape f), on détermine un jeu de données (24)
fourni à l'étape b), pour lequel un résultat de reconnaissance (16) répond à un critère prédéterminé, ce qui signifie que, pour l'environnement déterminé par le jeu de données (24), il existe un besoin d'autres contrôles fonctionnels du dispositif de reconnaissance (10), et
à l'étape f), le au moins un jeu de données de
complément (38) est produit par modification seulement d'une partie du jeu de données déterminé (24) de sorte que le jeu de données de complément décrive un environnement similaire à celui qui a déjà été simulé sur la base du jeu de données déterminé (24), et
dans lequel une suite (L) des étapes a) à f) est
réalisée à plusieurs reprises l'une derrière l'autre et, en l'occurrence, lors d'au moins une répétition de la suite (L), on ajoute à l'étape b) en plus le au moins un jeu de données de complément (38) produit à l'étape f) précédente et dans lequel la réalisation répétée de la suite (L) est interrompue à l'étape e), au cas où le résultat (22) de la comparaison répond à un critère prédéterminé et on obtient de la sorte un groupement (26) de jeux de données qui permet une simulation d'environnements originaux et également même une simulation des environnements pour lesquels un contrôle plus précis du mode de fonctionnement du dispositif de reconnaissance (10) est nécessaire.

2. Procédé selon la revendication 1,
dans lequel, à l'étape c) de la production des données
de capteur, on détermine la même chose sur la base de valeurs caractéristiques appliquées au au moins un capteur.

3. Procédé selon l'une quelconque des revendications
précédentes,
**caractérisé en ce que** :
pour chaque environnement pour la production de données de capteur, une image photo de l'environnement simulé est calculée et des données d'image de l'image photo sont fournies comme données de capteur.

4. Procédé selon la revendication 1,
dans lequel, à l'étape c) pour la production des
données de capteur,
- pour chaque environnement et pour chaque capteur, au moins une grandeur physique est réglée à une valeur qui ressort de la simulation,
- avec chaque capteur, on mesure la au moins une grandeur physique apparentée et
- les signaux de mesure de tous les capteurs sont fournis comme données de capteur.

5. Procédé selon l'une quelconque des revendications
précédentes,
dans lequel, à l'étape f), au moins un paramètre (42)
utilisé par le dispositif de reconnaissance (10) est également modifié (S7) en fonction du résultat (22) de la comparaison, dans lequel une affectation de données de capteur à un certain résultat éventuel de reconnaissance est déterminée par le paramètre (42).

6. Procédé selon la revendication 5,
dans lequel le au moins un paramètre (42) est modifié
à l'aide d'un entraînement (S7) du dispositif de reconnaissance (10) avec des données de capteur (12) dans un environnement simulé (30), pour lequel un résultat (22) de la comparaison répond à un critère prédéterminé.

7. Dispositif pour permettre un contrôle fonctionnel d'un dispositif de reconnaissance (10) qui permet une reconnaissance automatique d'un objet dans un environnement d'un véhicule automobile sur la base de données de capteur d'au moins un capteur du véhicule automobile, comprenant :
- un dispositif (14) pour simuler un environnement sur la base d'un jeu de données (24) déterminant l'environnement à simuler ;
- un dispositif (28) pour produire des données de capteur (12) pour le au moins un environnement simulé ;
- un dispositif pour exploiter le dispositif de reconnaissance (10) avec les données de capteur (12) ;
- un dispositif (18) pour comparer un résultat de reconnaissance (16) du dispositif de reconnaissance avec un résultat de reconnaissance théorique défini par l'environnement simulé (20) ;
- un dispositif (32) pour produire au moins un jeu de données de complément (38), qui est conçu, en fonction d'un résultat (22) d'une comparaison réalisée par le dispositif de comparaison (18) par modification seulement d'une partie d'un jeu de données (24), pour lequel le résultat de reconnaissance (16) répond à un critère prédéterminé, pour produire un jeu de données de complément, qui permet une simulation d'un autre environnement,
**caractérisé en ce que** :
le dispositif est conformé pour réaliser un procédé
selon l'une quelconque des revendications précédentes.
